# EUROPÄISCHE PATENTSCHRIFT

(11) **EP 0 726 194 B1**
(45) Veröffentlichungstag und Bekanntmachung des Hinweises auf die Patenterteilung: **01.12.1999**
(21) Anmeldenummer: 95113057.4
(22) Anmeldetag: 18.08.1995
(51) Int. Cl.: B62D 63/06, B60P 3/07, B60D 1/54

(54) **Kraftfahrzeuganhänger**
Vehicle trailer
Remorque de véhicule

(30) Priorität: 10.02.1995 DE 29502193 U
(43) Veröffentlichungstag der Anmeldung: 14.08.1996
(73) Patentinhaber: Fallert, Christian, 77887 Sasbachwalden (DE)
(72) Erfinder: Fallert, Christian, 77887 Sasbachwalden (DE)
(74) Vertreter: Pellmann, Hans-Bernd, Dipl.-Ing.

(56) Entgegenhaltungen:
- WO-A-93/11023
- FR-A- 890 488
- US-A- 3 612 600
- US-A- 3 625 545
- US-A- 4 786 073

## Beschreibung

Die vorliegende Erfindung bezieht sich auf einen Kraftfahrzeuganhänger insbesondere für den Transport von motorisierten Zweirädern wie z.B. Motorrädern, Mofas, Motorrollern usw. gemäß dem Oberbegriff des Patentanspruchs 1.

Aus der US 3,625,545 ist ein faltbarer Anhänger dieser Gattung bekannt, bestehend aus einer Radachse und einer Deichsel, die über eine arretierbare Gelenkverbindung schwenkbar mit der Radachse verbunden ist. Durch diesen Aufbau kann der Anhänger aus einer Zugposition in eine zusammengefaltete Kompaktposition gebracht werden, in der er nur einen geringen Platzbedarf hat und somit auf engsten Räumen abgestellt werden kann.

Aus der US 3,612,600 ist ebenfalls ein faltbarer Anhänger bekannt, dessen Anhängeraufbau aus einer Anzahl von Paneelen besteht. Diese Paneele sind vverschiebbar an der Radachse montiert und können so zusammengeschoben werden, daß der Anhänger in Kompaktposition möglichst klein baut.

Schließlich sei noch auf die FR-A-3 612 600 verwiesen, aus der ein faltbarer Anhänger bekannt ist, dessen Aufbau ähnlich zur US,3,612,600 aus Paneelen besteht. Diese Paneele sind jedoch im Gegensatz zur US,3,612,600 nicht verschiebbar sondern schwenkbar an der Radachse gelagert und können so in eine Kompaktposition umgeklappt werden.

All diese Anhänger haben jedoch folgenden Nachteil gemeinsam:

Werden z.B. Lasten mittels einem solchen Kraftfahrzeuganhänger von einem Ort zu einem anderen überführt, ist der Kraftfahrzeugfahrer gezwungen, auch während einer Rückfahrt bei entladenem Anhänger nur mit der für Kraftfahrzeug mit Anhänger maximal zulässigen Höchstgeschwindigkeit zu fahren. Darüberhinaus müssen sämtliche Unannehmlichkeiten hinsichtlich der Manövrierbarkeit und Handlichkeit des Kraftfahrzeugs weiterhin in Kauf genommen werden, die durch den angekuppelten leeren Anhänger entstehen.

Der Erfindung liegt die Aufgabe zugrunde, die Wirtschaftlichkeit und Funktionalität eines gattungsgemäßen Kraftfahrzeuganhängers zu verbessern.

Diese Aufgabe wird erfindungsgemäß durch einen Kraftfahrzeuganhänger mit den Merkmalen im Anspruch 1 gelöst.

Nach Anspruch 1 ist dabei vorgesehen, daß die Radachse nach Überführen der Deichsel sowie des Abstützbauteils in ihre jeweilige Kompaktposition auf einem Kupplungsknauf eines fahrzeugseitigen Kupplungsteils derart abstützbar ist, daß Laufräder des Anhängers von der Fahrbahn abgehoben sind. Hierfür ist nach Anspruch 3 ein zusätzliches Kupplungsteil, vorzugsweise einen Kugelkopfhalter angeordnet, das in einem Mittenabschnitt der Radachse vorgesehen und mit einem Kupplungsknauf des fahrzeugseitigen Kupplungsteils zur Abstützung der Radachse in Eingriff bringbar ist. Somit läßt sich der Anhänger außerhalb des Kraftfahrzeugs quasi als Anhängerpaket auf dem fahrzeugseitigen Kupplungsteil mitführen, ohne daß Stauraum, beispielsweise im Kofferraum des Kraftfahrzeugs, verloren geht. Als Alternative zu dieser Ausführungsform wäre natürlich auch denkbar, daß nach dem Lösen der Verbindung die Deichsel in eine solche Lage bezüglich der Achse bringbar und darin fixierbar ist, daß der Kupplungsteil an der Deichsel selbst zur vorstehend erwähnten Abstützung des Anhängerpakets über dem fahrzeugseitigen Kupplungsknauf verwendbar ist.

Durch die Weiterbildung nach Anspruch 4 ist es möglich, die Gesamtlänge der Deichsel zu verringern, bevor sie durch Verdrehen des Trägerelements in die Kompaktstellung gebracht wird, in der sie sich im wesentlichen parallel zur Radachse ausrichtet.

Nach Anspruch 5 ist es weiterhin vorgesehen, daß das Trägerelement auf seiner zur Radachse weisenden Unterseite zu einem sockelartigen Unterbau ausgebildet ist, der in seinem Mittenabschnitt an der Radachse über einen Drehbolzen gelagert ist. Dadurch wird ermöglicht, die Länge des Trägerelements ungeachtet des Radstands beliebig zu halten, da bei Verdrehen des Trägerelements dieses über die Anhängerräder hinwegschwenkt ohne diese zu berühren.

Eine weitere vorteilhafte Ausbildung des Erfindungsgegenstands nach Anspruch 6 sieht vor, daß sich an einem zum Zug/Druckelement gegenüberliegenden Endabschnitt des Trägerelements ein Abstützbauteil in Form einer Bodenplatte oder einer Laufschiene befindet, das als ein Auflager für eine zu transportierende Last vorgesehen ist. Nach Anspruch 7 ist dabei beabsichtigt, daß das Abstützelement über ein Schaniergelenk, eine Schraubverbindung oder einen Teleskopmechanismus mit dem Trägerelement verbunden ist. Durch diese Maßnahme ist es möglich, das Abstützelement aus einer Auflagerposition, in der es als Auflager für die Transportlast dient, in eine Kompaktposition durch entsprechendes Verschwenken, Verdrehen oder Einziehen zu überführen, in der es unmittelbar über oder neben dem Trägerbauteil zu liegen kommt. Anschließend wird das Trägerelement samt Zug/Druckstange und Abstützelement in die Kompaktposition verschwenkt und arretiert.

Weitere vorteilhafte Ausbildungen der Erfindung sind Gegenstand der übrigen Unteransprüche.

Im folgenden wird die Erfindung anhand eines bevorzugten Ausführungsbeispiels unter Bezugnahme auf die Figuren näher erläutert.
Fig. 1 zeigt eine Seitenansicht eines erfindungsgemäßen Ausführungsbeipiels für einen Kraftfahrzeuganhänger in ausgedrehtem und ausgeklapptem Zustand, d.h. in Zugposition.
Fig. 2 zeigt eine Seitenansicht des Ausführungsbeispiels des erfindungsgemäßen Kraftfahrzeuganhängers in Kompaktposition, in der der Kraftfahrzeuganhänger auf dem fahrzeugseitigen Kupplungsknauf quasi als Gepäckstück mitgeführt werden kann.

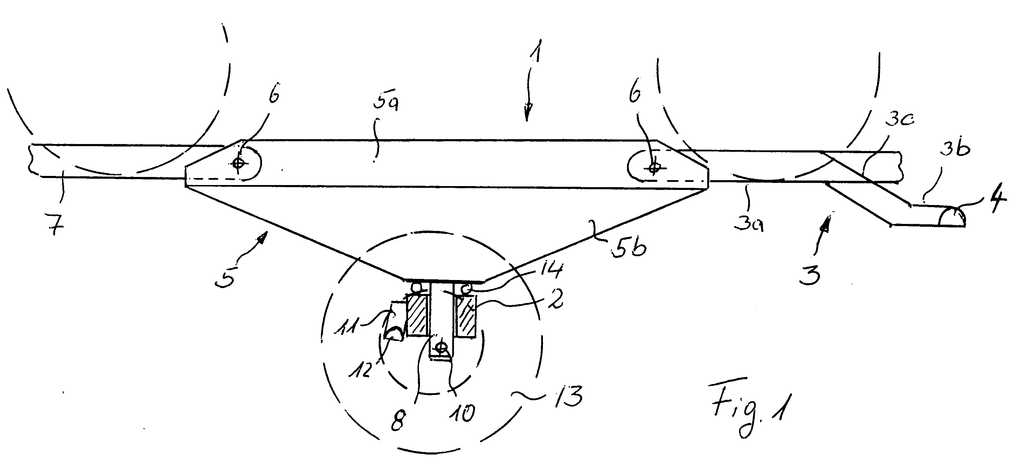

Gemäß der Fig. 1 hat der erfindungsgemäße Kraftfahrzeuganhänger nach einem bevorzugten Ausführungsbeispiel eine Deichsel 1, die drehbar in einem Mittenabschnitt einer Achse 2 des Anhängers befestigt bzw. gelagert ist und in Zugposition zusammen mit der Achse 2 das biege- und torsionssteife Grundgerüst für einen Anhängeraufbau bildet.

Hierfür besteht die Deichsel 1 aus einem vorderen Zug/Druckelement in Form einer Zug/Druckstange 3, die an einem vorderen Ende (gemäß Fig. 1 rechten Ende) einen Kugelkopfhalter 4 für das Ankuppeln des Anhängers an einen nicht gezeigten, fahrzeugseitigen Kupplungsknauf aufweist. Gemäß der Fig. 1 ist dabei die Zug/Druckstange 3 nach unten abgeknickt und bildet so zwei im Höhenabstand zueinander liegender, parallel zueinander verlaufender Teilstücke 3a, 3b, die durch ein Mittelstück 3c miteinander verbunden sind. Das obere Teilstück 3a ist in diesem Ausführungsbeispiel zu einer Radlaufschiene ausgebildet, die als ein erstes Auflager eines zu transportierenden Zweirads dient. Es wäre aber auch denkbar, anstelle dieser besonderen Ausgestaltung eine gerade Zug/Druckstange zu verwenden, an die eine zusätzliche Radlaufschiene in Rinnenform angeschraubt oder angeschweißt ist.

An einem dem Kugelkopfhalter 4 gegenüberliegenden Ende ist die Zug/Druckstange 3 an ein Trägerelement 5 als ein weiteres Bauteil der Deichsel 1 schanierförmig angelenkt, welches ebenfalls mit einer Laufschiene 5a ausgebildet ist und an deren Unterseite sich ein sockelartiges, trapezförmiges Basisteil 5b einstückig daran befindet. Die Anlenkpunkte 6 sind dabei so gewählt, daß in ausgeklapptem Zustand der Zug/Druckstange ein Endabschnitt des Trägerelements 5 als Anschlag dient, sodaß eine nahezu gerade Lauffläche entsteht. An einem der Zug/Druckstange 3 gegenüberliegenden Endabschnitt des Trägerelements 5 ist eine weitere, hintere Laufschiene 7 fluchtend in gleicher Weise wie die Zug/Druckstange 3 angelenkt, sodaß beim Ausklappen der hinteren Laufschiene 7 und der vorderen Zug/Druckstange 3 eine im wesentlichen gerade Laufschienenfläche bzw. Laufrille etwa in der Länge eines handelsüblichen Zweirads entsteht.

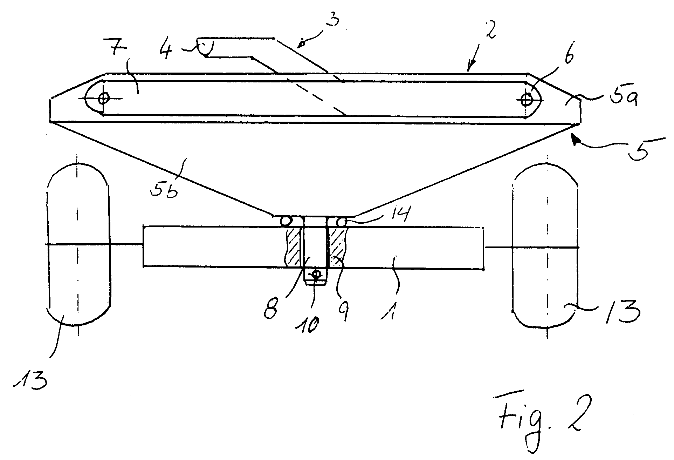

Wie insbesondere aus der Fig. 2 zu entnehmen ist, ist am unteren Abschnitt des sockelartigen Basisteils 5b ein Drehbolzen 8 angeordnet, der sich im wesentlichen senkrecht zur Laufschienenfläche des Trägerelements 5 nach unten erstreckt. Dieser Bolzen 8 greift dabei in ein entsprechend dimensioniertes Lagerauge 9 an der Radachse 2 ein und ist mittels eines Splints 10 gegen ein unbeabsichtiges Herausziehen gesichert. Das Lagerauge 9 wird in diesem Ausführungsbeispiel durch eine einfache Durchgangsbohrung in die Radachse 2 ausgebildet. Es ist aber auch möglich, ein einzelnes Lagerauge als Bauteil seitlich an der Radachse 2 zu befestigen. Wichtig hierbei ist jedoch, daß ein freies Verdrehen des Trägerelements 5 und damit der gesamten Deichsel 1 oberhalb der Radachse 2 in dem Lagerauge 9 möglich bleibt. Darüberhinaus ist das Lagerauge 9 mit einer in den Figuren nicht weiter dargestellten Arretiervorrichtung beispielsweise einer Drehbremse oder einem Sperrstift ausgebildet, mittels der das Trägerelement 5 in einer Zugposition gemäß der Fig. 1 und einer Kompaktposition gemäß der Fig. 2 arretiert werden kann.

Wie vorstehend bereits angedeutet wurde, ist die Deichsel 1 d.h. in diesem Fall die vordere Zug/Druckstange sowie die hintere Laufschiene 7 entweder als U-Profil oder in einem Rund-Vollprofil aus Stahl mit daran befestigter Laufrinne ausgeführt. Aus Gewichtsgründen könnte hierbei jedoch auch ein Hohlprofil aus einem leichteren Werkstoff wie z.B. einer Aluminiumlegierung mit vergleichbarer Steifigkeit gewählt werden, an der eine Laufschiene vorzugsweise aus einem Kunstharz-Verbundwerkstoff befestigt ist.

Die Achse 2 weist gemäß der Fig. 1 ferner in ihrem Mittenabschnitt einen rechtwinklig zur Achse vorstehenden Stutzen 11 oder Absatz auf, dessen äußerer Endabschnitt zu einer zusätzlichen Kupplungsschale 12 ausgebildet ist. An den Enden der Achse 2 selbst sind Laufräder 13 gelagert, deren Rotationszentren gemäß diesem Ausführungsbeispiel im wesentlichen axial zur Achse 2 angeordnet sind. Es bleibt an dieser Stelle noch zu erwähnen, daß das Trägerelement 5 bzw. dessen oberseitiger Laufschiene 5a im wesentlichen die Länge entsprechend der Spurbreite des Anhängers aufweist, sodaß durch das Vorsehen des sockelartigen Basisteils 5b das Trägerelement 5 in eingedrehter Kompaktposition über die Laufräder 13 des Anhängers ragen kann.

Im folgenden wird die Funktions- und Wirkungsweise der Erfindung anhand der Fig. 1 und 2 näher erläutert:
Die Fig. 1 zeigt den Anhänger gemäß dem bevorzugten Ausführungsbeispiel in ausgedrehtem und ausgeklapptem Zustand, d.h. also in Zugposition. Wie aus Fig. 1 zu entnehmen ist, wird die vordere Zug/Druckstange 3 sowie die hintere Laufschiene 7 durch die von den jeweiligen Endabschnitten des Trägerelements 5 ausgebildeten Anschlägen im wesentlichen fluchtend zueinander gehalten, sodaß eine nahezu gerade Laufschienenfläche bestehend aus der hinteren Laufschiene 7, dem Trägerelement 5 sowie dem oberen Teilstück 3a der vorderen Zug/Druckstange 3 ausgebildet wird. In diesem Ausführungsbeispiel besteht die einzige Verbindung zwischen der Deichsel 1 bzw. dem Trägerelement 5 und der Radachse 2 in dem dargestellten Drehbolzen mit einem ggf. zwischengefügten Axialkugellager 14, wobei der Bolzen 8 in die achsseitige Lagerbohrung 9 eingesteckt ist.

Beim Transport eines Zweirads sind indessen erhebliche Querbeschleunigungskräfte zu erwarten, die zu einem Abreißen des Bolzens 8 führen würden. Um dies zu vermeiden, können wahlweise nicht gezeigte Stützstreben oder einfache Ösen beidseits des Trägerelements an der Radachse angeordnet sein, über die entweder durch die Streben selbst oder durch durch die Ösen geführte Abspannseile die Querkräfte in die Achse eingeleitet werden können.

Um nun den erfindungsgemäßen Anhänger zu einem kompakten Anhängerpaket zusammenzuklappen, wird zuerst die hintere Laufschiene 7 und anschließend die vordere Zug/Druckstange 3 an den Schanierpunkten 6 am Trägerelement 5 umgelegt und auf diesem mittel nicht gezeigter Fixiermittel beispielweise ein elastisches Zugseil oder dergleichen festgelegt. Hierauf wird die Arretiervorrichtung am achsseitigen Lagerauge 9 gelöst und das Trägerelement 5 mit der darauf befindlichen hinteren Laufschiene 7 und der Zug/Druckstange 3 in die Kompaktposition gemäß Fig. 2 gedreht, in der sich die Laufschiene 5a des Trägerelements 5 im wesentlichen parallel zur Radachse 2 oberhalb dieser ausrichtet. Durch entsprechendes Betätigen der Arretiervorrichtung wird das Trägerelement 5 schließlich in dieser Position an der Achse 2 fixiert. In dieser Weise läßt sich das so zusammengeklappte und eingedrehte Anhängerpaket an der zweiten Kupplungsschale 12 auf dem fahrzeugseitigen Kupplungsknauf einkuppeln und über das fahrzeugseitige Kupplungsteil hochklappen, sodaß die Laufräder 13 nichtmehr die Fahrbahn berühren.

Es dürfte für den Fachmann auf der Hand liegen, daß anstelle der vorstehend beschriebenen Schaniergelenke 6 zwischen dem Trägerelement 5 und der Zu/Druckstange 3 bzw. dem hinteren Auflagerelement 7 auch ein Teleskopmechanismus, Bajonetverschluß oder dergeleichen Verbindung vorgesehen werden kann, die ein Verkürzen der Gesamtlänge des Anhängers durch entsprechendes Umlegen oder Einziehen des vorderen und hinteren Elements erlauben.

Gemäß dem vorstehend beschriebenen Ausführungsbeispiel sind die Laufräder 13 des Anhängers auf der Anhängerachse 2 selbst gelagert, sodaß im hochgeklappten Zustand sowohl die Achse 2 wie auch die Laufräder 13 über dem fahrzeugseitigen Kupplungsknauf zu liegen kommen. Hierdurch wird erreicht, daß zwischen den Laufrädern 13 und dem Fahrzeug ein genügend großer Abstand eingehalten werden kann, um so ein Scheuern der Räder 13 an der Fahrzeugkarosserie zu verhindern. Die sich hierbei jedoch ausbildende instabile Lage des Anhängerpakets muß durch zusätzliche, in den Figuren nichtgezeigte Verstrebungen zwischen der Achse 2 und dem fahrzeugseitigen Kupplungsteil ausgeglichen werden.

Um die Handhabung in diesem letztgenannten Problempunkt zu erleichten ist es alternativ möglich, daß die Laufräder 13 einfach parallel zur Achse 2 im wesentlichen in Richtung des zweiten Aufnahmestutzens 11 über die zusätzliche Kupplungsschale 12 hinaus versetzt angeordnet und über jeweils einen Ausleger mit der Achse 2 verbunden werden. Durch diese Ausführung kann der durch die Laufräder 13 maßgeblich beeinflußte Schwerpunkt des zusammengklappten Anhängerpakets im hochgeklappten Zustand in der Höhe sogar unter den fahrzeugseitigen Kupplungsknauf verlagert werden, sodaß eine stabile Lage auf dem fahrzeugseitigen Kupplungsteil erreicht wird. Bei dieser Alternativlösung können demnach Verstrebungen zur Abstützung des Anhängerpakets entfallen und optional durch Gurte zur Verhinderung von Pendelbewegungen des Pakets auf dem Kupplungsknauf ersetzt werden.

Es sei abschließend noch darauf hingewiesen, daß das erfindungsgemäße Prinzip nach vorstehender Beschreibung nicht ausschließlich nur bei Anhängern zum Transport von motorisierten Zweirädern geeignet ist. Es kann selbstverständlich auch bei Anhängern für den Transport von Fahrrädern, Booten, oder konventionellen Lasten wie Schränke und d.gl. Gegenstände angewendet werden. In solchen Fällen müßte einfach eine einsprechende konstruktive Adaption der Lastabstützbauteile, d.h. konkret der vorstehend beschriebenen Laufschienen in geeignete Aufnahmevorrichtungen erfolgen, ohne daß sich hierdurch an der Funktionsweise des erfindungsgemäßen Anhängers etwas ändern würde.

## Patentansprüche

1. Kraftfahrzeuganhänger insbesondere zum Transport von Zweirädern, mit
einer Deichsel (1) zur Ankupplung an ein Kraftfahrzeug, die an einer Radachse (2) über eine arretierbare Dreh- oder Gelenkverbindung (8, 9) gehalten ist, welche ein Verschwenken der Deichsel (1) bezüglich der Radachse (2) aus einer Zugposition in eine Kompaktposition innerhalb einer Schwenkebene ermöglicht, die im wesentlichen parallel zur Radachse (1) liegt, dadurch gekennzeichnet, daß
die Radachse (2) nach Verschwenken der Deichsel (1) in ihre Kompaktposition auf einem Kupplungsknauf eines fahrzeugseitigen Kupplungsteils derart abstützbar ist, daß Laufräder (13) des Anhängers von der Fahrbahn abgehoben sind.

2. Kraftfahrzeuganhänger nach Anspruch 1, dadurch gekennzeichnet, daß
die Deichsel (1) an einem freien Ende ein Kupplungsstück (4), vorzugsweise einen Kugelkopfhalter aufweist.

3. Kraftfahrzeuganhänger nach Anspruch 2,
gekennzeichnet durch
ein zusätzliches Kupplungsteil (12), vorzugsweise einen Kugelkopfhalter, das in einem Mittenabschnitt der Radachse (2) angeordnet und in Kompaktposition der Deichsel (1) mit dem Kupplungsknauf des fahrzeugseitigen Kupplungsteils zur Abstützung der Radachse (2) in Eingriff bringbar ist.

4. Kraftfahrzeuganhänger nach einem der vorstehenden Ansprüche, dadurch gekennzeichnet, daß
die Deichsel (1) aus einem Trägerelement (5), welches über die Drehverbindung (8, 9) auf der Radachse (2) abgestützt ist und einem Zug/Druckelement (3) besteht, das über ein Scharniergelenk (6) oder einen Schraubverschluß oder ein Teleskopstück mit dem Trägerelement (5) verbunden ist, das mit dem Kupplungsstück (4) ausgebildet ist.

5. Kraftfahrzeuganhänger nach Anspruch 4, dadurch ***gekennzeichnet, daß***
das Trägerelement (5) auf seiner zur Radachse (2) weisenden Unterseite zu einem sockelartigen Unterbau (5b) ausgebildet ist, der in seinem Mittenabschnitt an der Radachse (2) drehbar gelagert und derart dimensioniert ist, daß bei Verdrehen des Trägerelements (5) bezüglich der Radachse (2) das Trägerelement (5) über die Laufrädern (15) des Anhängers hinweg schwenkt.

6. Kraftfahrzeuganhänger nach einem der Ansprüche 4 oder 5, dadurch gekennzeichnet, daß
sich an einem zum Zug/Druckelement (3) gegenüberliegenden Endabschnitt des Trägerelements (5) ein Abstützbauteil (7) befindet, das als ein Auflager für eine zu transportierende Last vorgesehen ist.

7. Kraftfahrzeuganhänger nach Anspruch 6, dadurch gekennzeichnet, daß
das Abstützelement (7) über ein Scharniergelenk (6), eine Schraubverbindung oder einen Teleskopmechanismus mit dem Trägerelement (5) verbunden ist.

8. Kraftfahrzeuganhänger nach Anspruch 7, dadurch ***gekennzeichnet, daß***
das Abstützelement (7) aus einer Auflagerposition, in der es als Auflager für die Transportlast dient, in eine Kompaktposition überführbar ist, in der es unmittelbar über oder neben dem Trägerbauteil (5) zu liegen kommt und daß das Zug/Druckelement (3) durch das Scharniergelenk (6), den Schraubverschluß oder das Teleskopstück unmittelbar über oder neben dem Trägerelement (5) positionierbar ist.

9. Kraftfahrzeuganhänger nach einem der vorstehenden Ansprüche 4 bis 8,
***dadurch gekennzeichnet, daß***
das Trägerelement (5) in Kompaktposition im wesentlichen parallel zur Radachse (2) ausgerichtet ist und im wesentlichen eine Länge entsprechend der Spurbreite des Anhängers aufweist.

10. Kraftfahrzeuganhänger nach Anspruch 5, dadurch gekennzeichnet, daß
sowohl das Abstützelement (7) wie auch das Zug/Druckelement (3) jeweils eine Laufschiene (3a) vorzugsweise zur Auflagerung des Laufrads eines Zweirads hat.

## Claims

1. Motor vehicle trailer, particularly for transporting bicycles, with a drawbar (1) for coupling to a motor vehicle, said drawbar being held on an axle (2) by a lockable swivel or articulated joint (8, 9) which allows the drawbar (1) to swing with respect to the axle (2) from a towing position to a compact position in a pivoting plane essentially parallel with the axle (2), characterized in that after the drawbar (1) has been swung into its compact position, the axle (2) can be supported on a coupling knob on a vehicle-side coupling-part so that running wheels (13) of the trailer are raised dear of the road.

2. Trailer according to Claim 1, characterized in that the drawbar (1) has a coupling piece (4), preferably a ball socket, at its free end.

3. Trailer according to claim 2, characterized by an additional coupling part (12), preferably a ball socket, located in a central section of the axle (2) and engageable, in the compact position of the drawbar (1), with the coupling knob of the vehicle-side coupling-part to support the axle (2).

4. Trailer according to any one of the preceding claims, characterized in that the drawbar (1) comprises a beam element (5) which is supported on the axle (2) by the swivel joint (8, 9) and a tension/compression element (3) which is connected by a hinge joint (6) or screw fastener or telescopic piece to the beam element (5) which is formed with the coupling piece (4).

5. Trailer according to Claim 4, characterized in that the beam element (5) is formed on its underside facing the axle (2) into a pedestal-type substructure (5b) which is swivel-mounted on the axle (2) in its central section and is dimensioned so that the beam element (5) swings over the running wheels (15) of the trailer when the beam element (5) is swung with respect to the axle (2).

6. Trailer according to Claim 4 or Claim 5, characterized in that a rest component (7) provided as a support for a load to be transported is located at the opposite end section of the beam element (5) to the tension/compression element (3).

7. Trailer according to Claim 6, characterized in that the rest element (7) is connected to the beam element (5) by a hinge joint (6), a screw fastener or a telescopic mechanism.

8. Trailer according to Claim 7, characterized in the the rest element (7) is transferable from a support position in which it serves as support for the transported load to a compact position in which it is located directly over or beside the beam component (5), and in that the tension/compression element (3) is positionable directly over or beside the beam element (5) by the hinge joint (6), screw fastener or telescopic piece.

9. Trailer according to any one of the preceding Claims 4 to 8, characterized in that the beam element (5) is aligned essentially parallel with the axle (2) when in the compact position, and its length is essentially equal to the wheel track of the trailer.

10. Trailer according to Claim 5, characterized in that the rest element (7) and the tension/compression element (3) each have a rail (3a) preferably for supporting the running wheel of a bicycle.

## Revendications

1. Remorque de véhicule automobile, en particulier pour le transport de deux-roues, comprenant un timon (1) pour attelage à un véhicule automobile, lequel timon est monté sur un essieu (2) par l'intermédiaire d'un joint articulé ou tournant (8, 9), qui est bloquable et qui permet un pivotement du timon (1) par rapport à l'essieu (2), d'une position de traction à une position compacte, dans un plan de pivotement qui s'étend sensiblement parallèlement à l'essieu (2),
caractérisée en ce que
après pivotement du timon (1) dans sa position compacte, l'essieu (2) peut être supporté par une boule d'attelage d'une pièce d'attelage se trouvant sur le véhicule, de telle façon que les roues de roulement (13) de la remorque soient décollées de la chaussée.

2. Remorque de véhicule selon la revendication 1, caractérisée en ce que le timon (1) comporte à son extrémité libre une pièce d'attelage (4), de préférence une tête en cloche pour fixation à une boule d'attelage.

3. Remorque de véhicule selon la revendication 2, caractérisée par une pièce d'attelage (12) supplémentaire, de préférence une tête en cloche pour fixation à une boule d'attelage, qui est disposée dans une partie médiane de l'essieu (2) et qui, dans la position compacte du timon (1), peut être mise en prise avec la boule d'attelage de la pièce d'attelage se trouvant du côté du véhicule, pour supporter l'essieu (2).

4. Remorque de véhicule selon l'une quelconque des revendications précédentes, caractérisée en ce que le timon, (1) se compose d'un élément porteur (5), qui est supporté sur l'essieu (2) par le joint tournant (8, 9), et d'un élément de traction/poussée (3), qui est relié à l'élément porteur (5) par une articulation à charnière (6) ou par une fermeture à vis ou par une pièce télescopique et qui est pourvu de la pièce d'attelage (4).

5. Remorque de véhicule selon la revendication 4, caractérisée en ce que, sur son côté inférieur tourné vers l'essieu (2), l'élément porteur (5) est réalisé sous la forme d'une infrastructure (5b) du genre socle, qui, dans sa partie médiane, est montée rotative sur l'essieu (2) et est dimensionnée de telle façon que, lors d'une rotation de l'élément porteur (5) par rapport à l'essieu (2), l'élément porteur (5) pivote en passant par dessus les roues (13) de la remorque.

6. Remorque de véhicule selon la revendication 4 ou 5, caractérisée en ce qu'à l'extrémité de l'élément porteur (5), qui est située à l'opposé de l'élément de traction/poussée (3), se trouve une pièce de support (7) qui est prévue pour servir d'appui pour une charge à transporter.

7. Remorque de véhicule selon la revendication 6, caractérisée en ce que l'élément de support (7) est relié à l'élément porteur (5) par une articulation à charnière (6), un assemblage à vis ou un mécanisme télescopique.

8. Remorque de véhicule selon la revendication 7, caractérisée en ce que l'élément de support (7) peut être déplacé d'une position d'appui, dans laquelle il sert d'appui pour une charge à transporter, à une position compacte, dans laquelle il vient s'allonger directement sur l'élément porteur (5) ou près de celui-ci, et en ce que l'élément de traction/poussée (3) peut être positionné directement sur l'élément porteur (5) ou près de celui-ci à l'aide de l'articulation à charnière (6), de la fermeture à vis ou de la pièce télescopique.

9. Remorque de véhicule selon l'une quelconque des revendications précédentes 4 à 8, caractérisée en ce que, dans sa position compacte, l'élément porteur (5) est orienté essentiellement parallèlement à l'essieu (2) et présente sensiblement une longueur correspondant à l'écartement des roues de la remorque.

10. Remorque de véhicule selon la revendication 5, caractérisée en ce que l'élément de support (7) comme l'élément de traction/poussée (3) ont chacun un rail de roulement (3a) de préférence pour supporter la roue d'un deux-roues.
